# EUROPÄISCHE PATENTSCHRIFT

(11) **EP 0 481 212 B1**
(45) Veröffentlichungstag und Bekanntmachung des Hinweises auf die Patenterteilung: **27.07.1994**
(21) Anmeldenummer: 91115247.8
(22) Anmeldetag: 10.09.1991
(51) Int. Cl.: F16C 11/06

(54) **Kugelgelenk**
Ball joint
Articulation à rotule

(30) Priorität: 13.10.1990 DE 4032541
(43) Veröffentlichungstag der Anmeldung: 22.04.1992
(73) Patentinhaber: TRW Fahrwerksysteme GmbH & Co. KG, 40547 Düsseldorf (DE)
(72) Erfinder: Broszat, Lothar, W-4019 Monheim (DE); Schütt, Hans-Joachim, W-5010 Bergheim (DE)
(74) Vertreter: Stenger, Watzke & Ring Patentanwälte

(56) Entgegenhaltungen:
- EP-A- 0 082 638
- DE-A- 3 821 146
- DE-A- 3 933 163
- DE-C- 879 631
- DE-C- 925 328
- FR-A- 1 337 181
- FR-A- 2 208 474
- LU-A- 54 720
- US-A- 4 161 055

## Beschreibung

Die Erfindung betrifft ein Kugelgelenk mit einem einen Kugelkopf und einen Gelenkzapfen aufweisenden Kugelzapfen, der in einem Gelenkgehäuse schwenkbeweglich gelagert ist, wobei der Kugelkopf in einer einteilig ausgebildeten, im Gelenkgehäuse aufgenommenen Lagerschale aus Kunststoff gleitend gelagert ist, und die Lagerschale einen zapfenseitig angeordneten, sich radial nach außen erstreckenden, ringförmigen Ansatz aufweist, der an der öffnungsseitigen Stirnfläche des Gelenkgehäuses anliegt.

Aus der DE-OS 39 05 474 ist ein gattungsgemäßen Kugelgelenk mit einem Kunststoff-Kugelsitz für den Kugelabschnitt eines Kugelzapfens bekannt. Der Kugelsitz hat an seiner geschlossenen Seite eine innere Ringausnehmung und besteht aus einem Hartkunststoff, dem die Ringausnehmung hinreichende Montageelastizität verleiht. Ferner ist der Kugelsitz zur Erhöhung der Festigkeit des Kugelgelenkes mit einem oberen Kegelabschnitt und einem unteren Kegelabschnitt versehen.

Aus der DE-OS 38 43 331 ist ferner ein Kugelgelenk mit einem einen Kugelkopf und einen Gelenkzapfen aufweisenden Kugelzapfen bekannt, wobei der Kugelkopf des Kugelzapfens in einem Kunststoff-Lagersitz des Kugelgelenkes angeordnet ist. Der Kunststoff-Lagersitz des Kugelgelenkes ist im Bereich einer Sitzverbindung mit einem metallischen Gehäuse mit Eingriffsabschnitten versehen, von denen zumindest einer unter Erwärmung über das zugehörige Ende des Gehäuses umgebogen wird.

Bei diesen vorbekannten Kugelgelenken ist es nachteilig, daß die Einzelteile sehr passgenau ausgebildet sein müssen, um eine sichere Funktion des Kugelgelenks zu gewährleisten. Ferner ist es bei diesen Kugelgelenken nachteilig, daß die aus Kunststoff bestehenden Einzelteile ungünstige Gleit-, Abnutzungs- und Ermüdungseigenschaften aufweisen, die zu einer Veränderung der Vorspannung und der Betriebskennwerte des Kugelgelenkes führen können. Durch diese Eigenschaften kann sich der Kunststoff-Kugelsitz nach einer gewissen Betriebsdauer von dem Gelenkgehäuse lösen.

Schließlich ist aus der US-PS 2,560,024 ein Kugelgelenk bekannt, welches ein innen topfartig ausgebildetes Gehäuse hat, an dem eine Lagerschale mittels am zapfenseitigen Gehäuserand anliegenden Lagerschalenansatz formschlüssig befestigt ist. Nachteil dieser vorbekannten Konstruktion ist, daß die Montage der Einzelteile sehr aufwendig ist und keine zuverlässig wirkende Verbindung zwischen dem Lagerschalenansatz und dem Gehäuse möglich ist.

Ausgehend von diesem Stand der Technik liegt der Erfindung die **Aufgabe** zugrunde, eine einfach herzustellende und zuverlässig wirkende Verbindung zwischen dem Lagerschalenansatz und der Gehäusestirnfläche anzugeben.

Zur technischen **Lösung** dieser Aufgabe ist vorgesehen, daß im Anlagebereich das Gelenkgehäuse, das innen topfartig ausgebildet ist, und der Ansatz stoffschlüssig miteinander verbunden sind und mit einem an dem einen der beiden Teile ausgebildeten Ringsteg und mit einer am anderen der beiden Teile ausgebildeten Ringnut ineinander eingreifen.

Dieses erfindungsgemäße Kugelgelenk besteht aus nur drei Einzelteilen und ist einfach herstellbar und montierbar, wobei die Lagerschale sicher, luft- und staubdicht mit dem Gelenkgehäuse verbunden ist. Die Lagerschale kann beispielsweise in einfacher Weise mit dem Gelenkgehäuse dadurch verbunden werden, daß der Ansatz der Lagerschale mit der Stirnfläche des Gelenkgehäuses verklebt wird. Diese Verbindung ist auch dann möglich, wenn das Gelenkgehäuse beispielsweise aus Metall und die Lagerschale aus Kunststoff besteht. Durch die einteilige Ausbildung der Lagerschale und des ringförmigen Ansatzes ist eine kostengünstige einfache Herstellung und Montage dieses Bauteils im Gelenkgehäuse möglich.

Bei einer bevorzugten Ausführungsform erfolgt die Verbindung des Ansatzes mit dem Gelenkgehäuse entweder im Ultraschallschweißverfahren oder im Reibschweißverfahren. Hierbei ist es notwendig, daß sowohl die Lagerschale und der Ansatz als auch das Gelenkgehäuse aus einer identischen Kunststoffmatrix bestehen. Durch das Verschweißen der Bauteile mit Ultraschall wird auch bei unterschiedlichen Toleranzen der Bauteile eine spielfreie Lagerung zwischen dem Gelenkgehäuse und der Lagerschale gewährleistet.

Eine Vereinfachung der Montage der Bauteile und eine Verbesserung der Verbindung zwischen dem Ansatz und dem Gelenkgehäuse wird bei einer ersten bevorzugten Ausführungsform dadurch erzielt, daß der Ansatz mit einem umlaufenden Steg in eine in der Stirnfläche des Gelenkgehäuses angeordnete Nut eingreift. Durch den umlaufenden Steg wird die lagegenaue Anordnung der Lagerschale innerhalb des Gelenkgehäuses wesentlich vereinfacht. Ferner werden die Verbindungsflächen zwischen dem Ansatz und dem Gelenkgehäuse vergrößert, so daß eine größere Festigkeit der verbundenen Bauteile sowohl in axialer als auch in radialer Richtung des Kugelzapfens erreicht wird.

Bei einer zweiten bevorzugten Ausführungsform ist vorgesehen, daß das Gelenkgehäuse mit einem umlaufenden Steg in eine im Ansatz angeordnete Ringnut eingreift. Ein erfindungsgemäßes Kugelgelenk dieser zweiten Ausführungsform weist ebenfalls die bereits oben beschriebenen Vorteile auf.

Der Kugelkopf ist unter Vorspannung in der Lagerschale gelagert, so daß das Kugelgelenk auch nach einer längeren Einsatzzeit ein ausreichendes Drehmoment aufweist. Ferner wird durch die Vorspannung der Verschleiß der Lagerschale und eventuelle Fertigungstoleranzen ausgeglichen. Eine Erleichterung der Montage wird bei einer Weiterentwicklung des erfindungsgemäßen Kugelgelenks dadurch erzielt, daß die Lagerschale am inneren Rand in meridionaler Richtung verlaufende Schlitze aufweist. Vorzugsweise hat die Lagerschale vier jeweils um 90° versetzt angeordnete Schlitze.

Ferner ist es bei einer weiteren Ausgestaltung des Kugelgelenks vorteilhaft, daß der Ansatz einen radial nach außen gerichteten Bund hat, der mit der Stirnfläche des Gelenkgehäuses eine umlaufende Nut für einen Dichtungsbalg bildet. Dieser Dichtungsbalg ist in vorteilhafter Weise mit einem Spannring in der Nut befestigt.

Schließlich ist es bei einer weiteren Ausgestaltung des Kugelgelenkes vorteilhaft, daß die Lagerschale im Bereich ihres inneren Randes einen im Vergleich zum Radius des Kugelkopfes kleineren Radius aufweist. Hierdurch weicht die Innenkontur der Lagerschale vor dem Zusammenbau des Kugelgelenkes von der Außenkontur des Kugelkopfes ab. Durch diese Abweichung wird bereits durch das Einsetzen des Kugelkopfes, noch vor dem Einbau der Schale in das Gelenkgehäuse eine Vorspannung zwischen dem Kugelkopf und der Lagerschale erzielt.

Weitere Einzelheiten und Vorteile ergeben sich aus der folgenden Beschreibung der zugehörigen Zeichnungen, in denen zwei bevorzugte Ausführungsformen eines erfindungsgemäßen Kugelgelenkes dargestellt worden sind. In den Zeichnungen zeigen:
- Fig. 1: eine erste Ausführungsform eines zusammengesetzten Kugelgelenkes im Längsschnitt;
- Fig. 2: dasselbe Kugelgelenk geschnitten als Sprengbild;
- Fig. 3: eine zweite Ausführungsform eines zusammengesetzten Kugelgelenks im Längsschnitt und
- Fig. 4: dasselbe Kugelgelenk geschnitten als Sprengbild.

Das Kugelgelenk hat einen einen Kugelkopf 1 und einen Gelenkzapfen 2 aufweisenden Kugelzapfen 3. Der Gelenkzapfen 2 weist an seinem Ende 4 ein Gewinde 5 auf.

Der Kugelkopf 1 ist schwenkbeweglich in einer Lagerschale 6 gehalten, welche in einem Gelenkgehäuse 7 angeordnet ist. Die Lagerschale 6 weist an ihrem inneren Rand 8 vier jeweils um 90° versetzt angeordnete, in meridionaler Richtung verlaufende Schlitze 9 auf. An diesem inneren Rand 8 der Lagerschale 6 ist der Radius r der Lagerschale 6 vor dem Zusammenfügen der Lagerschale 6 und des Kugelkopfes 1 kleiner als der Radius R des Kugelkopfes 1. Durch diese Ausgestaltung wird eine Vorspannung der Lagerschale 6 auf den Kugelkopf 1 erzielt. Am zapfenseitigen Rand 10 der Lagerschale 6 ist ein sich radial nach außen erstreckender, ringförmiger Ansatz 11 angeordnet, der an öffnungsseitigen Stirnflächen 12 des Gelenkgehäuses 7 befestigt ist.

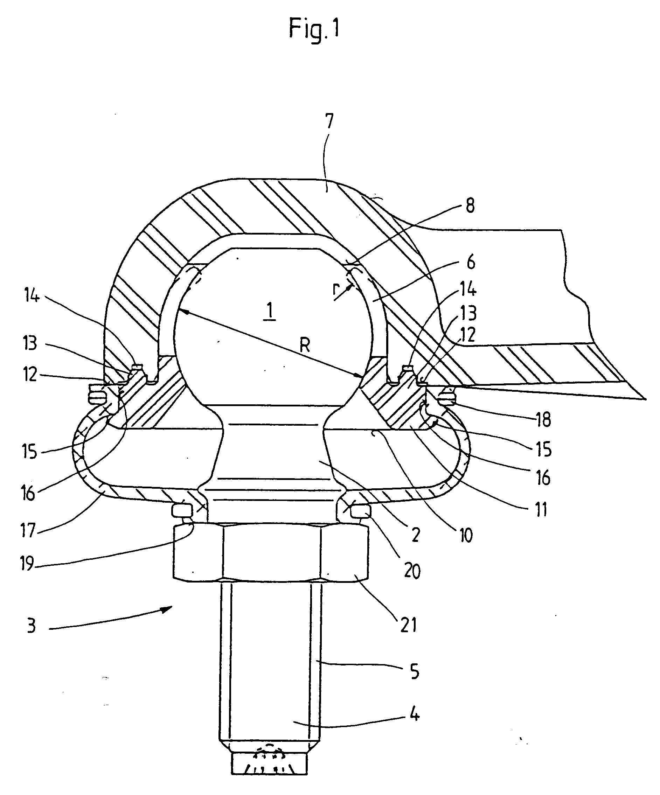

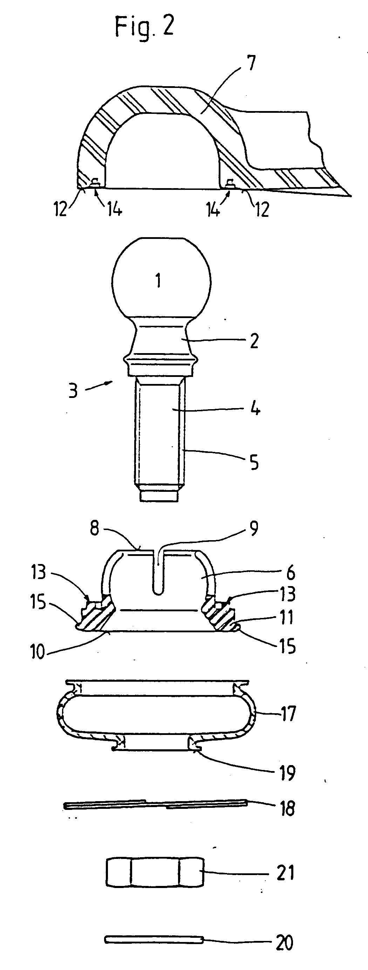

Bei dem in den Figuren 1 und 2 dargestellten ersten Ausführungsbeispiel weist der Ansatz 11 einen umlaufenden Steg 13 auf, der in eine in der Stirnfläche 12 des Gelenkgehäuses 7 angeordnete Ringnut 14 eingreift.

Am zapfenseitigen Rand 10 des Ansatzes 11 ist ein radial nach außen gerichteter Bund 15 angeordnet, der mit der Stirnfläche 12 des Gelenkgehäuses 7 eine umlaufende Nut 16 bildet. In der Nut 16 ist ein Dichtungsbalg 17 mit einem Spannring 18 am Gelenkgehäuse 7 und dem Ansatz 11 der Lagerschale 6 befestigt. Mit seinem zapfenseitigen Ende 19 ist der Dichtungsbalg 17 staubdicht mit einem zweiten Spannring 20 am Gelenkzapfen 2 befestigt. Unterhalb des zapfenseitigen Endes 19 des Dichtungsbalges 17 ist eine Mutter 21 auf das Gewinde 5 des Kugelzapfens 3 geschraubt. Es ist auch möglich, daß unterhalb des zapfenseitigen Endes 19 des Dichtungsbalges 17 ein angeformter Sechskant-Bund bzw. Schlüsselflächen-Bund angeordnet ist.

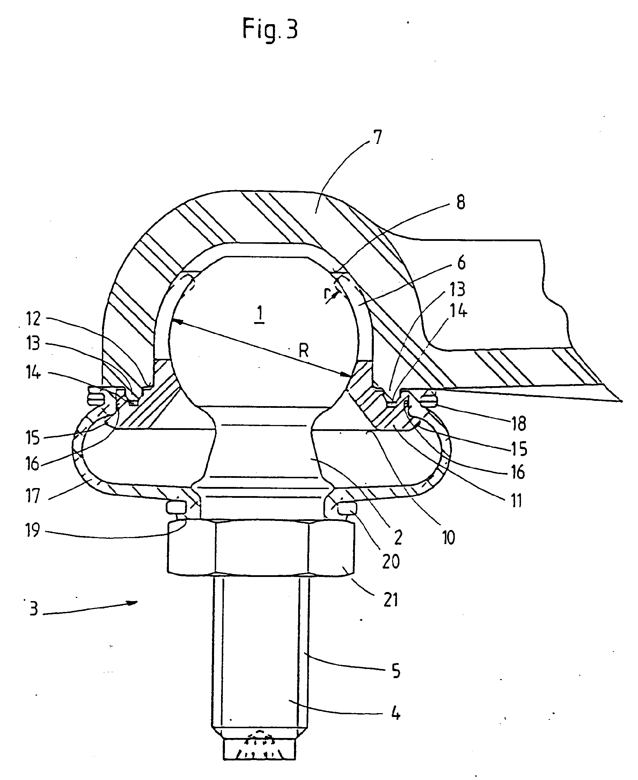

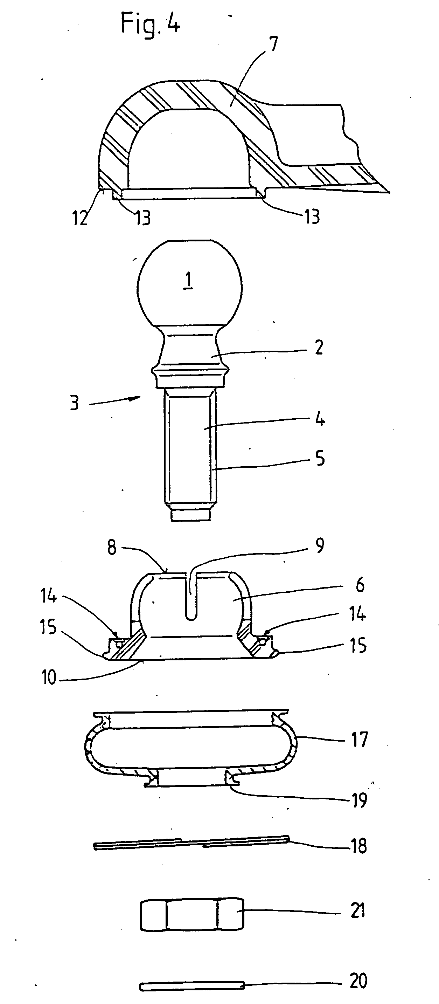

Die in den Figuren 3 und 4 dargestellte zweite Ausführungsform des Kugelzapfens unterscheidet sich von der zuvor beschriebenen ersten Ausführungsform dadurch, daß das Gelenkgehäuse 7 mit einem an der Stirnfläche 12 umlaufenden Steg 13 in eine im Ansatz 11 angeordnete Ringnut 14 eingreift.

Wie aus den Figuren 2 und 4 ersichtlich ist, wird beim Zusammenbau des Kugelgelenks zunächst der Kugelzapfen 3 mit seinem Kugelkopf 1 durch die am Rand 8 der Lagerschale 6 angeordnete Öffnung in die Lagerschale gedrückt. Anschließend wird die Lagerschale 6 zusammen mit dem Kugelzapfen 3 derart in das Gelenkgehäuse 7 geschoben, daß der Steg 13 in die Ringnut 14 eingreift. Hieraufhin wird die aus Kunststoff gefertigte Lagerschale 6 mit dem ebenfalls aus Kunststoff gefertigten Gelenkgehäuse 7 im Ultraschallschweißverfahren verbunden, so daß sich auch bei unterschiedlichen Toleranzen der Bauteile eine spielfreie Lagerung sowohl des Kugelkopfes 1 in der Lagerschale 6 als auch der Lagerschale 6 im Gelenkgehäuse 7 ergibt. Letztlich wird dann noch der Dichtungsbalg 17 mit den Spannringen 18 und 20 an dem Ansatz 11 der Lagerschale 6 und am Gelenkzapfen 2 des Kugelzapfens 3 befestigt.

### Bezugszeichenliste

- 1: Kugelkopf
- 2: Gelenkzapfen
- 3: Kugelzapfen
- 4: Ende
- 5: Gewinde
- 6: Lagerschale
- 7: Gelenkgehäuse
- 8: Rand
- 9: Schlitz
- 10: Rand
- 11: Ansatz
- 12: Stirnfläche
- 13: Steg
- 14: Ringnut
- 15: Bund
- 16: Nut
- 17: Dichtungsbalg
- 18: Spannring
- 19: Ende
- 20: Spannring
- 21: Mutter

- r: Radius am inneren Rand der Lagerschale
- R: Radius des Kugelkopfes

## Patentansprüche

1. Kugelgelenk mit einem einen Kugelkopf (1) und einen Gelenkzapfen (2) aufweisenden Kugelzapfen (3), der in einem Gelenkgehäuse (7) schwenkbeweglich gelagert ist, wobei der Kugelkopf (1) in einer einteilig ausgebildeten, im Gelenkgehäuse aufgenommenen Lagerschale (6) aus Kunststoff gleitend gelagert ist, und die Lagerschale (6) einen zapfenseitig angeordneten, sich radial nach außen erstreckenden, ringförmigen Ansatz (11) aufweist, der an der öffnungsseitigen Stirnfläche (12) des Gelenkgehäuses (7) anliegt,
**dadurch gekennzeichnet,**
daß im Anlagebereich das Gelenkgehäuse (7), das innen topfartig ausgebildet ist, und der Ansatz (11) stoffschlüssig miteinander verbunden sind und mit einem an dem einen der beiden Teile ausgebildeten Ringsteg (13) und mit einer am anderen der beiden Teile ausgebildeten Ringnut (14) ineinander eingreifen.

2. Kugelgelenk nach Anspruch 1, dadurch gekennzeichnet, daß die Verbindung des Ansatzes (11) mit dem Gelenkgehäuse (7) im Ultraschallschweißverfahren erfolgt.

3. Kugelgelenk nach Anspruch 1, dadurch gekennzeichnet, daß die Verbindung des Ansatzes (11) mit dem Gelenkgehäuse (7) im Reibschweißverfahen erfolgt.

4. Kugelgelenk nach Anspruch 1, dadurch gekennzeichnet, daß der Ansatz (11) den Ringsteg (13) und die Stirnfläche (12) des Gelenkgehäuses (7) die Ringnut (14) trägt.

5. Kugelgelenk nach Anspruch 1, dadurch gekennzeichnet, daß die Stirnfläche des Gelenkgehäuses (7) den Ringsteg (13) und der Ansatz (11) die Ringnut (14) trägt.

6. Kugelgelenk nach Anspruch 1, dadurch gekennzeichnet, daß die Lagerschale (6) von ihrem dem Gehäuseboden zugewandten Rand ausgehende, in meridionaler Richtung verlaufende Schlitze (9) aufweist.

7. Kugelgelenk nach Anspruch 6, dadurch gekennzeichnet, daß die Lagerschale (6) vier jeweils um 90° versetzt angeordnete Schlitze (9) aufweist.

8. Kugelgelenk nach Anspruch 1, dadurch gekennzeichnet, daß der Ansatz (11) einen radial nach außen gerichteten Bund (15) hat, der mit der Stirnfläche (12) des Gelenkgehäuses (7) eine umlaufende Nut (16) zur Aufnahme der Ränder eines Dichtungsbalges (17) bildet.

9. Kugelgelenk nach Anspruch 8, dadurch gekennzeichnet daß der Dichtungsbalg (17) mit einem Spannring in der Nut (16) befestigt ist.

10. Kugelgelenk nach Anspruch 1, dadurch gekennzeichnet, daß die Lagerschale (6) im Bereich ihres dem Gehäuseboden zugewandten Randes (8) einen im Vergleich zum Radius (R) des Kugelkopfes (1) kleineren Radius (r) aufweist.

## Claims

1. A ball joint with a ball pivot (3) having a ball head (1) and a pivot pin (2), said ball pivot (3) being pivotally mounted in a joint casing (7), wherein the ball head (1) is mounted, in a sliding manner, in a single-piece bearing shell (6) made of plastic, contained in the joint casing, and the bearing shell (6) has, arranged on the pin side, an annular projection (11), extending radially outwards, which lies against the front face (12) of the joint casing (7) on the opening side, characterised in that, in the contact region, the joint casing (7), which is pot-shaped inside, and the projection (11) are connected to one another in a resistance-fitting manner and engage in one another with an annular land (13) provided on one of the two parts and with an annular groove (14) provided on the other of the two parts.

2. A ball joint according to claim 1, characterised in that the projection (11) is connected to the joint casing (7) using the ultrasound welding method.

3. A ball joint according to claim 1, characterised in that the projection (11) is connected to the joint casing (7) using the friction welding method.

4. A ball joint according to claim 1, characterised in that the projection (11) contains the annular land (13) and the front face (12) of the joint casing (7) contains the annular groove (14).

5. A ball joint according to claim 1, characterised in that the front face of the joint casing (7) contains the annular land (13) and the projection (11) contains the annular groove (14).

6. A ball joint according to claim 1, characterised in that the bearing shell (6) has slots (9) extending in the meridional direction from its edge facing the base of the casing.

7. A ball joint according to claim 6, characterised in that the bearing shell (6) has four slots (9), each arranged offset by 90°.

8. A ball joint according to claim 1, characterised in that the projection (11) has a collar (15), directed radially outwards, which, together with the front face (12) of the joint casing (7), forms a peripheral groove (16) for receiving the edges of a sealing diaphragm (17).

9. A ball joint according to claim 8, characterised in that the sealing diaphragm (17) is fixed in the groove (16) with a tension ring.

10. A ball joint according to claim 1, characterised in that the bearing shell (6), in the region of its edge (8) facing the base of the casing, is of smaller radius (r) in comparison to the radius (R) of the ball head (1).

## Revendications

1. Articulation à rotule, comprenant un pivot à rotule (3) qui comporte une tête sphérique (1) et une tige d'articulation (2) et qui est monté pivotant dans une cage (7) de l'articulation, la tête sphérique (1) étant montée à glissement dans un coussinet monobloc (6) en matière synthétique qui est logé dans la cage de l'articulation et le coussinet (6) comprenant un épaulement annulaire (11) s'étendant radialement vers l'extérieur, disposé côté tige et prenant appui contre la surface frontale (12), côté ouverture, de la cage (7) de l'articulation, caractérisée en ce que la cage (7) de l'articulation, qui est conformée intérieurement à la façon d'un pot, et l'épaulement (11) sont liés par la matière l'un avec l'autre dans la zone d'appui et pénètrent l'un dans l'autre par une nervure annulaire (13) réalisée sur l'une des deux pièces et par une gorge annulaire (14) réalisée sur l'autre des deux pièces.

2. Articulation à rotule selon la revendication 1, caractérisée en ce que la liaison de l'épaulement (11) et de la cage (7) de l'articulation est effectuée par un procédé de soudage aux ultrasons.

3. Articulation à rotule selon la revendication 1, caractérisée en ce que la liaison de l'épaulement (11) et de la cage (7) de l'articulation est effectuée par un procédé de soudage à friction.

4. Articulation à rotule selon la revendication 1, caractérisée en ce que l'épaulement (11) porte la nervure annulaire (13) et la surface frontale (12) de la cage (7) de l'articulation porte la gorge annulaire (14).

5. Articulation à rotule selon la revendication 1, caractérisée en ce que la surface frontale de la cage (7) de l'articulation porte la nervure annulaire (13) et l'épaulement (11) porte la gorge annulaire (14).

6. Articulation à rotule selon la revendication 1, caractérisée en ce que le coussinet (6) comporte des fentes (9) qui partent de son bord tourné vers le fond de la cage et qui s'étendent suivant la direction méridienne.

7. Articulation à rotule selon la revendication 6, caractérisée en ce que le coussinet (6) comporte quatre fentes (9) décalées de 90°.

8. Articulation à rotule selon la revendication 1, caractérisée en ce que l'épaulement (11) comporte un collet (15) orienté radialement vers l'extérieur et formant avec la surface frontale (12) de la cage (7) de l'articulation une gorge circonférentielle (16) de logement des bords d'un manchon d'étanchéité (17).

9. Articulation à rotule selon la revendication 8, caractérisée en ce que le manchon d'étanchéité (17) est fixé dans la gorge (16) au moyen d'un anneau de serrage.

10. Articulation à rotule selon la revendication 1, caractérisée en ce que le coussinet (6) a un rayon (r) plus petit que le rayon (R) de la tête sphérique (1) dans la zone de son bord (8) qui est tourné vers le fond de la cage.
